# EUROPÄISCHE PATENTSCHRIFT

(11) **EP 3 740 393 B1**
(45) Veröffentlichungstag und Bekanntmachung des Hinweises auf die Patenterteilung: **13.07.2022**
(21) Anmeldenummer: 19716765.3
(22) Anmeldetag: 15.01.2019
(51) Int. Cl.: B60K 7/00

(54) **VORRICHTUNG ZUR DREHMOMENTÜBERTRAGUNG ZWISCHEN EINEM RAD UND EINER IM RAD INTEGRIERTEN ELEKTRISCHEN MASCHINE**
DEVICE FOR TRANSMITTING TORQUE BETWEEN A WHEEL AND AN ELECTRIC MACHINE INTEGRATED INTO THE WHEEL
DISPOSITIF DESTINÉ À LA TRANSMISSION DE COUPLE ENTRE UNE ROUE ET UNE MACHINE ÉLECTRIQUE INTÉGRÉE DANS LA ROUE

(30) Priorität: 17.01.2018 DE 102018100994
(43) Veröffentlichungstag der Anmeldung: 25.11.2020
(73) Patentinhaber: Otto-von-Guericke-Universität Magdeburg, 39106 Magdeburg (DE)
(72) Erfinder: KASPER, Roland, 39326 Samswegen (DE); PEREKOPSKIY, Sergey, 39104 Magdeburg (DE)
(86) Internationale Anmeldenummer: PCT/DE2019/100031
(87) Internationale Veröffentlichungsnummer: WO 2019/141312

(56) Entgegenhaltungen:
- DE-A1- 10 338 659
- DE-A1-102016 201 694

## Beschreibung

### Technisches Gebiet

Die vorliegende Erfindung betrifft eine Vorrichtung zur Übertragung eines Antriebsdrehmomentes oder eines Abstützmomentes zwischen einem Rad oder einem Fahrzeug und einer im Rad integrierten elektrischen Maschine bei gleichzeitiger Entkopplung der Maschine von Verformungen und Kräften, die aufgrund von Fahrmanövern auf das Rad und die Radaufhängung wirken.

### Hintergrund der Erfindung

Mehrere Ausführungen der elektrischen Maschinen, die in der Felge des Fahrzeugs, z.B. als Radnabenmotor, eingebaut werden, haben heutzutage ein signifikantes Anwendungspotenzial. Ein solches Konzept ermöglicht den Wegfall vieler Bauteile, was Platz und Gewicht spart, und freien Bauraum im Aufbau des Fahrzeuges schafft.

Die Masse der elektrischen Maschine bei diesem Prinzip ist ein wichtiger Parameter, wobei die Verwendung einer außen- oder innenrotierenden Maschine, z.B. mit Luftspaltwicklung, ein geringes Gesamtgewicht der elektrischen Maschine ermöglicht.

### Stand der Technik

DE 602 17 661 T2 zeigt ein Befestigungsverfahren und eine Reihe der nach diesem Verfahren entwickelten Vorrichtungen für ein im Rad eingebautes Motorsystem für eine Verwendung in einem Fahrzeug mit Direktantriebsrädern als Antriebsräder und beinhaltet 16 Ausführungen solcher Motorsysteme. Dieses Verfahren zum Befestigen eines im Rad eingebauten Motors für ein Direktantriebsrad an einem ungefederten Abschnitt einer Fahrzeugkarosserie, wobei die Fahrzeugkarosserie mittels eines Aufhängungselementes befestigt ist. Das Verfahren weist den folgenden Schritt auf: Befestigen des Motors am ungefederten Abschnitt und/oder der Fahrzeugkarosserieseite mittels eines Dämpfungselementes oder einer Dämpfungseinheit, um als Gewicht einer dynamischen Dämpfungseinrichtung für die ungefederte Masse zu funktionieren. Das Prinzip des Verfahrens besteht größtenteils in der Dämpfung zwischen gefederten und ungefederten Teilen des Fahrzeuges. Das Ziel dieses Verfahrens besteht darin, den negativen Einfluss der ungefederten Massen zu verringern, aber nicht jedoch die Drehmomentübertragung inklusive Kraftentkoppelung.

DE10 2009 038 416 A1 zeigt einen Drehschwingungsdämpfer für einen Elektromotor sowie einen Radnabenmotor, welcher zur Minderung des Rastmoments vorgesehen ist, wobei der Kraftfluss vom Rad zum Motor gleich gerichtet bleibt, was einen Einfluss auf den Motor hat, im Hinblick auf die Kräfte, die infolge der Fahrmanöver entstehen.

EP 1 906 039 A1 zeigt eine Vorrichtung zur Kopplung der Welle, die dann die Übertragung der Leistung zwischen zwei parallel zueinander liegende Wellenteile durch flexible Rollelemente realisiert, die durch kreuzende Führungsnuten verbunden sind und sich in einem rechtem Winkel schneiden, wodurch immer stabil Leistung an den Radnabenmotor übertragen werden kann, wobei jedoch keine Entkopplung der auf die Wellenteile wirkende Belastungen vorgesehen ist.

WO 2005 101 984 A3 zeigt eine Vorrichtung aus hohl-scheibenartigen Platten, die gleichzeitig Führungsschienen und kraftübertragende Elemente sind, für die Kopplung der rotierenden Teile des Radnabenmotors und der Felge. Diese Vorrichtung ermöglicht, dass das Direktantriebsmotormodul zuverlässig im dem Rad auch bei begrenzter Montagegenauigkeit installiert wird. Es kann eine Drehmomentübertragung entstehen, wobei sich die am Rad auftretenden Kräfte durch das Federsystem nicht entkoppeln zulassen.

DE102016201694A1 offenbart außerdem eine Vorrichtung zur Drehmomentübertragung zwischen einem Rad und einer im Rad integrierten elektrischen Maschine umfassend zumindest einen Rotor, einen Stator, eine Welle, eine Hauptlagerung und eine Nebenlagerung.

Während der Fahrt eines Fahrzeuges erfährt das Rad durch den Reifen verschiedene Belastungen, die auch auf die Felge und die Radaufhängung übertragen werden. Die vom Reifen aufgenommenen Kräfte werden an die Felge weitergeleitet bzw. stützen sich dort ab. Von der Felge wird die Kraft auf die Radnabe übertragen, wo diese von Bauteilen der in das Rad eingebauten elektrischen Maschine aufgenommen und weiter an die Radaufhängung geleitet wird.

Die in das Rad eingebaute elektrische Maschine stellt große Herausforderungen hinsichtlich der Konstruktion dar, da die Belastungen von der Straße auf das Rad und unmittelbar auf die elektrische Maschine übertragen werden. Besonders kritisch sind Fahrsituationen bei denen Schwellen oder Löcher überfahren werden oder bei denen ein seitlicher Kontakt des Reifens z.B. mit einem Bordstein erfolgt. Am Beispiel eines Radnabenmotors ist z.B. der Luftspalt zwischen der Wicklung des Stators und den Magneten des Rotors einer der wichtigsten Parameter der elektrischen Maschine, der unter allen Fahrsituationen und Belastungen einen Minimalwert nicht unterschreiten darf, was ein Hindernis für den Einsatz der elektrischen Maschine in Serienproduktion darstellen würde.

Die Aufgabe der vorliegenden Erfindung besteht darin, die aufgezeigten Nachteile zu überwinden.

Die Aufgabe wird durch eine Vorrichtung gemäß Anspruch 1 gelöst. Die Aufgabe wird weiterhin durch unterschiedliche Ausführungen der Einrichtungen gemäß den Unteransprüchen 2-14 gelöst.

Anspruch 1: Vorgeschlagen wird eine Vorrichtung (1) zur Drehmomentübertragung zwischen einem Rad (2) und einer im Rad (2) integrierten elektrischen Maschine (3) umfassend zumindest einen Rotor (5), einen Stator (6), eine Welle (7), eine Hauptlagerung (8) und eine Nebenlagerung (9), dadurch gekennzeichnet, dass eine geteilte Ubertragungsstruktur (ÜS) vorgesehen ist, welche formschlüssig zueinander angeordnete Übertragungselemente (1a, 1b) umfasst, wobei der Formschluss eine spielfreie Übertragung eines Antriebsdrehmomentes oder eines Abstützmoments entlang einer Raddrehachse (10) ermöglicht und wobei die Nebenlagerung (9) eine koaxiale Rotation zwischen feststehenden und rotierenden Teilen der Vorrichtung (1) gewährleistet, wobei alle nicht zum Antriebsdrehmoment bzw. Abstützmoment beitragenden Kräfte durch die Übertragungselemente (1a, 1b) mechanisch entkoppelt sind, wobei eine Kraftführung durch eine kinematische Anordnung von Haupt- (8) und Nebenlagerung (9) erfolgt.

Damit ist es möglich, die Übertragung von Verformungen und Kräften aufgrund von Fahrmanövern auf die in das Rad (2) integrierte elektrische Maschine (3) zu beschränken und dadurch wichtige Teile und Parameter der elektrischen Maschine wie Luftspalt (L) oder Nebenlager (9) möglichst wenig zu beeinflussen.

Aus dem Stand der Technik bekannte Ausführungen von elektrischen Maschinen weisen die Einleitung der Kräfte von Fahrmanöver durch die Hauptlagerbaugruppe auf. Diese Kräfte dürfen die relative Lage zwischen rotierenden und nichtrotierenden Teilen der elektrischen Maschine möglichst wenig beeinflussen. Dabei sollte das Gesamtgewicht des Rades und der integrierten elektrischen Maschine möglichst gering bleiben. Ebenso dürfen die Durchmesser der verwendeten Lager aus Kostengründen nicht zu groß werden.

Um dies zu realisieren, wird erfindungsgemäß eine Übertragungsstruktur (ÜS) vorgeschlagen. Diese Struktur dient dazu, die Verformung nicht auf die Teile der elektrischen Maschine (3) zu übertragen, sondern auf einem getrennten Kraftübertragungspfad direkt zur Radaufhängung des Fahrzeugs (4) zu führen. Ein besonderer Vorteil der erfindungsgemäßen Übertragungsstruktur (ÜS) besteht darin, dass die äußeren Kräfte nicht auf die Teile der elektrischen Maschine (3) übertragen werden, gleichzeitig jedoch das Antriebsdrehmoment von der elektrischen Maschine (3) zum Rad (2) weitergeleitet wird.

Um den Einfluss der äußeren Lasten auf diese kritischen Parameter der elektrischen Maschinen zu minimieren, erfolgt die Entkopplung der Antriebseite der elektrischen Maschine vom Rad bzw. vom Fahrzeug über eine geteilte Übertragungsstruktur.

Vorteilhafte Ausführungen der Erfindung sind in den Unteransprüchen 2 - 14 wie folgt dargestellt:
Anspruch 2: Vorrichtung (1) nach Anspruch 1, wobei die geteilte Übertragungsstruktur (ÜS) ein maschinenseitiges (1a) und ein radseitiges Übertragungselement (1b) umfasst.
Anspruch 3: Vorrichtung (1) nach Anspruch 1, wobei die geteilte Übertragungsstruktur (ÜS) ein maschinenseitiges (1a) und ein fahrzeugseitiges Übertragungselement (1b) umfasst.
Anspruch 4: Vorrichtung (1) nach Anspruch 1 oder 2, wobei die Übertragungselemente der maschinenseitigen Einrichtung (1a) der Übertragungsstruktur (ÜS) vom Rotor (5), der Welle (7) oder einer an diesen Teilen (5, 7) befestigten Tragstruktur gebildet werden.
Anspruch 5: Vorrichtung (1) nach Anspruch 1 oder 3, wobei die Übertragungselemente der maschinenseitigen Einrichtung (1a) der Übertragungsstruktur (ÜS) vom Stator (6), der Welle (7) oder einer an diesen Teilen befestigten Tragstruktur gebildet werden.
Anspruch 6: Vorrichtung (1) nach Anspruch 1 oder 2, wobei die Übertragungselemente der radseitigen Einrichtung (1b) oder der Übertragungsstruktur (ÜS) von einer Felge, einer Nabe, einer Bremseinrichtung, der Welle (7) des Rades (2) oder einer an diesen Teilen befestigten Tragstruktur gebildet werden.
Anspruch 7: Vorrichtung (1) nach Anspruch 1 oder 3, wobei die Übertragungselemente der maschinenseitigen Einrichtung (1a) der Übertragungsstruktur (ÜS) vom Fahrzeug (4), einem nichtdrehenden Flansch (8a) der Hauptlagerung (8) oder einer an diesen Teilen befestigten Tragstruktur gebildet werden.
Anspruch 8: Vorrichtung (1) nach Anspruch 1, dadurch gekennzeichnet, dass durch die geteilte Übertragungsstruktur (ÜS) die Übertragungselemente der radseitigen Einrichtung (1b) in Übertragungselemente der maschinenseitigen Einrichtung (1a) axial einschiebbar sind.
Anspruch 9: Vorrichtung (1) nach Anspruch 1, dadurch gekennzeichnet, dass die Übertragungsstruktur (ÜS) so ausgebildet ist, dass mehrere konvexe in radialer Richtung weisende Übertragungselemente der radseitigen oder der fahrzeugseitigen Einrichtung (1b), in zugehörige konkave Übertragungselemente der zweiten Anordnung so eingreifen, dass jeweils ein Formschluss zwischen den Übertragungselementen der radseitigen oder der fahrzeugseitigen (1b) und maschinenseitigen (1a) Einrichtung auftritt und insgesamt eine bewegliche lösbare Verbindung gebildet wird.
Anspruch 10: Vorrichtung (1) nach Anspruch 1, dadurch gekennzeichnet, dass die Übertragungsstruktur (ÜS) so ausgebildet ist, dass mehrere konvexe in axialer Richtung weisende Übertragungselemente der fahrzeugseitigen Einrichtung (1b), in zugehörige konkave Übertragungselemente der zweiten Anordnung so eingreifen, dass jeweils ein Formschluss zwischen den Übertragungselementen der radseitigen oder der fahrzeugseitigen (1b) und maschinenseitigen (1a) Einrichtung auftritt und insgesamt eine bewegliche lösbare Verbindung gebildet wird.
Anspruch 11: Vorrichtung (1) nach Anspruch 1, dadurch gekennzeichnet, dass die Übertragungselemente bei ihrer Verbindung eine Spielpassung haben.
Anspruch 12: Vorrichtung (1) nach Anspruch 1, dadurch gekennzeichnet, dass die Teile der Übertragungsstruktur seitens des Rades als Verbindungselemente für eine mehrteilige, vorzugsweise eine dreiteilige Felge dienen.
Anspruch 13: Vorrichtung (1) nach einem der vorhergehenden Ansprüche, dadurch gekennzeichnet, dass die elektrische Maschine (3) als ein Außenläufer ausgebildet ist.
Anspruch 14: Vorrichtung (1) nach einem der vorhergehenden Ansprüche, dadurch gekennzeichnet, dass die elektrische Maschine (3) als ein Innenläufer ausgebildet ist.

Die Funktion der erfindungsgemäßen Vorrichtung ist gekennzeichnet durch die gleichzeitige Erfüllung folgender Bedingungen und kann wie folgt definiert werden:
- Unter einer elektrischen Maschine versteht man einen Motor, einen Generator, einen Rekuperator o.ä. elektrische Maschine,
- Der Rotor der elektrischen Maschine stellt ein rotierendes zylindrisches Bauteil dar,
- Der Stator der elektrischen Maschine soll nicht rotieren, sondern sich am Fahrzeug abstützen,
- Unter feststehenden Teilen werden die Teile verstanden, die eine direkte oder indirekte Verbindung zum Stator haben;
- Unter rotierenden Teilen werden die Teile verstanden, die eine direkte oder indirekte Verbindung zum Rotor haben;
- Unter einem steifen Formschluss versteht man einen Formschluss, bei dem keine Schwingungen zwischen den verbundenen Teilen auftreten;
- Die Elektrische Maschine hat als Hauptlagerung eine Radlagereinheit,
- Montage der elektrischen Maschine sollte in eine ein- oder mehrteilige Felge oder eine adaptierte Felge erfolgen,
- An der elektrischen Maschine sollte eine Nebenlagerung für Stabilität des Rotors vorhanden sein,
- Unter einer kinematischen Anordnung versteht man die Anordnung der Haupt- und Nebenlagerung, die den Kraftfluss ausschließlich über die Hauptlagerung ans Fahrzeug/Fahrwerk leitet,
- Die Übertragungselemente der Übertragungsstruktur der im Folgenden genannten Ausführungen 1 und 2 sollen radseitlich axial eingeschoben werden können, so dass ein einfacher und schneller Radwechsel möglich ist,
- Die Übertragungselemente der fahrzeugseitigen, radseitigen und maschinenseitigen Einrichtungen sollen eine Elastizität, bevorzugt Biegeelastizität, in einer Größenordnung aufweisen, die ein Verkanten und damit eine unerwünschte Kraftübertragung verhindert ohne dabei die Drehsteifigkeit zur Übertragung eines Antriebsdrehmomentes oder Abstützmomentes zu verringern,
- Die Übertragungselemente der Übertragungsstruktur in Ausführung 1 sollten aus zwei koaxialen zylindrischen Anordnungen bestehen,
- Die Übertragungselemente der Übertragungsstruktur in Ausführung 2 sollten aus zwei parallelen kreisförmigen Anordnungen bestehen,
- Die Übertragungselemente der Übertragungsstruktur sollen miteinander so verbunden werden, dass jeweils ein Formschluss auftritt, der einen Freiheitsgrad blockiert, während die anderen Freiheitsgrade in ihrer Bewegung nicht eingeschränkt werden und insgesamt eine bewegliche lösbare Verbindung gebildet wird,
- Die Verbindung der Übertragungselemente von der Seite der Felge muss formschlüssig sein,
- Die Verbindung der Übertragungselemente von der Seite der Felge muss die notwendige Bewegungsfreiheit (axial und radial) erlauben,
- Form und Abmessungen der Kontaktstellen der Übertragungselemente der fahrzeugseitigen, radseitigen und maschinenseitigen Einrichtungen sollen die notwendigen Relativbewegungen ermöglichen und können Löcher, Langlöcher, Schlitze o.ä. sein,
- Form und Abmessungen der Kontaktstellen der Übertragungselemente der fahrzeugseitigen, radseitigen und maschinenseitigen Einrichtungen sollen die notwendigen Relativbewegungen ermöglichen und können Stifte, Bolzen, Zähne, Nägel, Dorne, Zapfen o.ä. sein,
- Verbindung der Übertragungselemente der fahrzeugseitigen, radseitigen und maschinenseitigen Einrichtungen soll eine Spielpassung sein,
- Als Spielpassung gelten hier Passungen, die laut DIN ISO 286 und DIN 7157 als "Spielpassung" gekennzeichnet sind,
- Die Oberflächenqualität der Übertragungselemente der fahrzeugseitigen, radseitigen und maschinenseitigen Einrichtungen sollen relatives Gleiten zueinander ermöglichen,
- Anzahl, Verschleißfestigkeit, innere Struktur des Werkstoffes und geometrische Parameter der Übertragungselemente sollen ausreichend sein, um die kritische Belastungen aushalten,
- Der innere Aufbau der Übertragungselemente oder zumindest deren Kontaktstellen können eine Behandlung, z.B. Beschichtung oder Auftragen eines Werkstoffs zur Erhöhung der Härte und zur Reduktion der Reibung und des Verschleißes erfahren.

Im Folgenden wird die Erfindung anhand zweier Ausführungsformen beschrieben, die anhand der in den Figuren dargestellten Beispiele näher erläutert werden.

Es zeigen:
Fig.1 Schematisch eine Vorrichtung (1) zur Drehmomentübertragung zwischen einem Rad (2) und einer im Rad (2) integrierten elektrischen Maschine (3) für die nachstehenden Ausführungen 1 und 2,
Fig.2 schematisch ein Beispiel der Ausführung 1 für einen im Rad (2) eingebauten Radnabenmotor mit einem erfindungsgemäßen Übertragungselement der maschinenseitigen Einrichtung (1a) der Übertragungsstruktur (ÜS) im Längsschnitt entlang der Raddrehsachse (10),
Fig.3 -schematisch ein Ausführungsbeispiel einer dreiteiligen Felge für das Rad (2) für die nachstehenden Ausführungen 1 und 2,

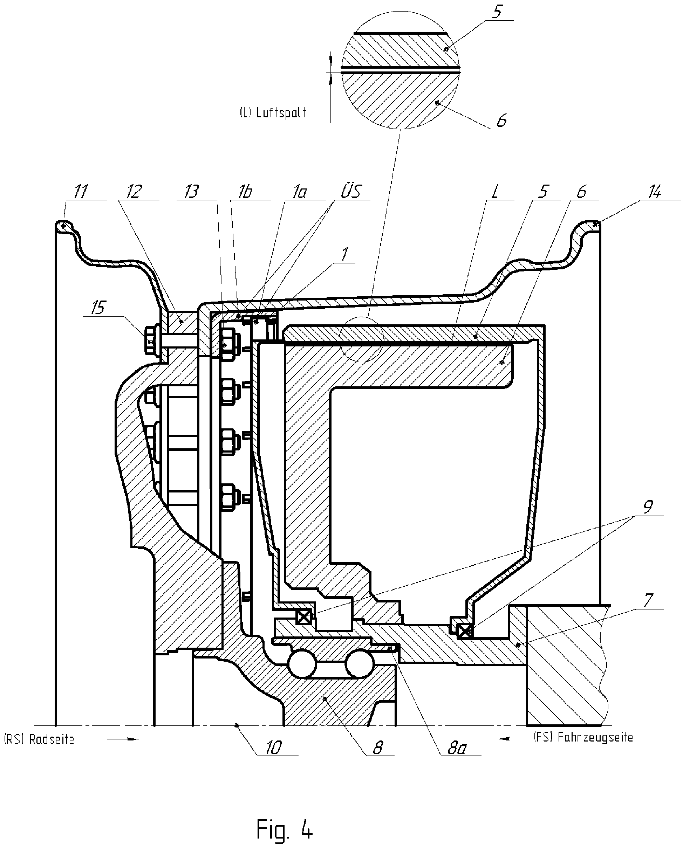

Fig.4 schematisch ein Beispiel der Ausführung 2 für einen im Rad (2) eingebauten Radnabenmotor mit einem erfindungsgemäßen Übertragungselement der maschinenseitigen Einrichtung (1a) der Übertragungsstruktur (ÜS) im Längsschnitt entlang der Raddrehsachse (10),
Fig.5 schematisch ein Ausführungsbeispiel der erfindungsgemäßen maschinenseitigen Einrichtung (1a) der Übertragungsstruktur (ÜS) für Ausführung 1,
Fig.6 schematisch ein Ausführungsbeispiel der erfindungsgemäßen radseitigen Einrichtung (1b) der Übertragungsstruktur (ÜS) für Ausführung 2,
Fig.7 schematisch ein Ausführungsbeispiel der Vorrichtung (1) für ein im Rad (2) eingebauter Radnabenmotor mit einem erfindungsgemäßen Übertragungselement der maschinenseitigen Einrichtung (1a) und der fahrzeugseitigen Einrichtung (1b) der Übertragungsstruktur (ÜS) im Längsschnitt entlang der Raddrehsachse (10) für die nachstehenden Ausführungen 1 und 2,
Fig.8 schematisch ein Beispiel der erfindungsgemäßen Übertragungsstruktur (ÜS) für Ausführung 1, wobei die Pfeile die Wirkung der Kräfte F_{R} und F_{A} von dem Rad (2) bzw. Bewegungsfreiheit (Freiheitsgrade) zeigen,
Fig.9 schematisch ein Beispiel der erfindungsgemäßen Übertragungsstruktur (ÜS) für Ausführung 2, wobei die Pfeile die Wirkung der Kräfte F_{R} und F_{A} von dem Rad (2) bzw. Bewegungsfreiheit (Freiheitsgrade) zeigen.

### AUSFÜHRUNG 1

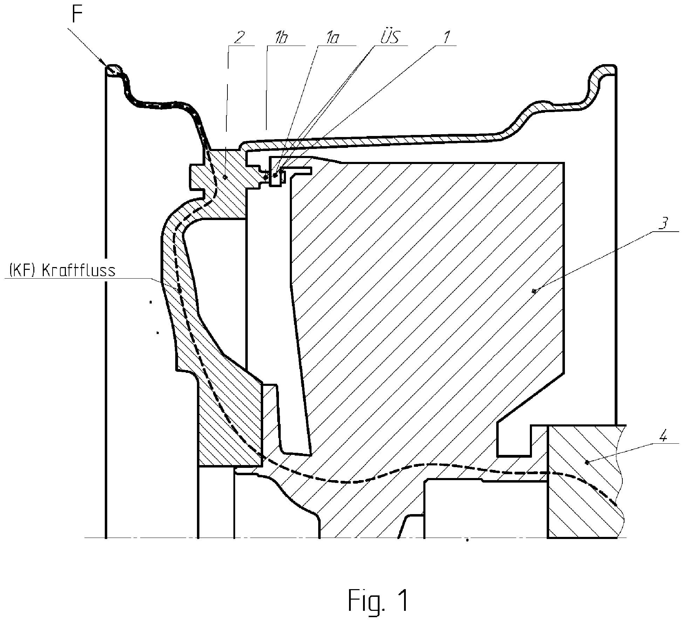

**Fig.1****,** **Fig.2****,** **Fig.3****,** **Fig.5****,** **Fig.7** und **Fig.8** sind die schematischen Darstellungen aufgeführt, die die Beschaffenheit der Ausführung 1 der vorliegenden Erfindung zeigen. **Fig. 1** ist eine Längsschnittdarstellung entlang der Raddrehsachse (10) einer in einem Rad (2) eingebauten elektrischen Maschine (3) (z.B. Radnabenmotor) mit einem erfindungsgemäßen Übertragungselement der maschinenseitigen Einrichtung (1a) der Übertragungsstruktur.

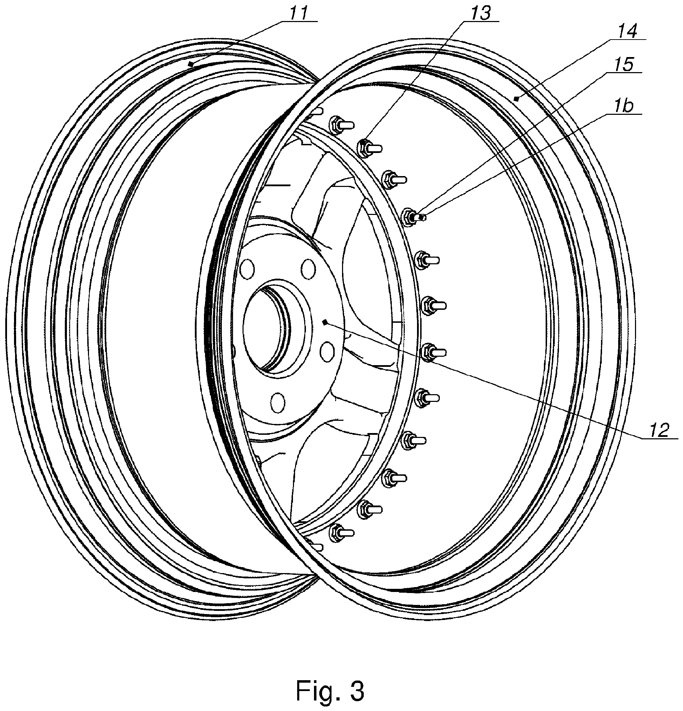

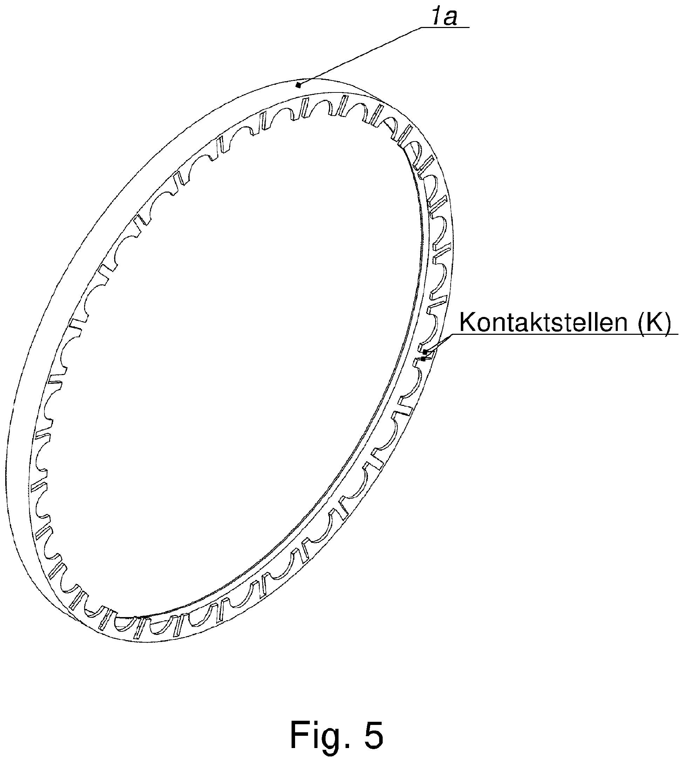

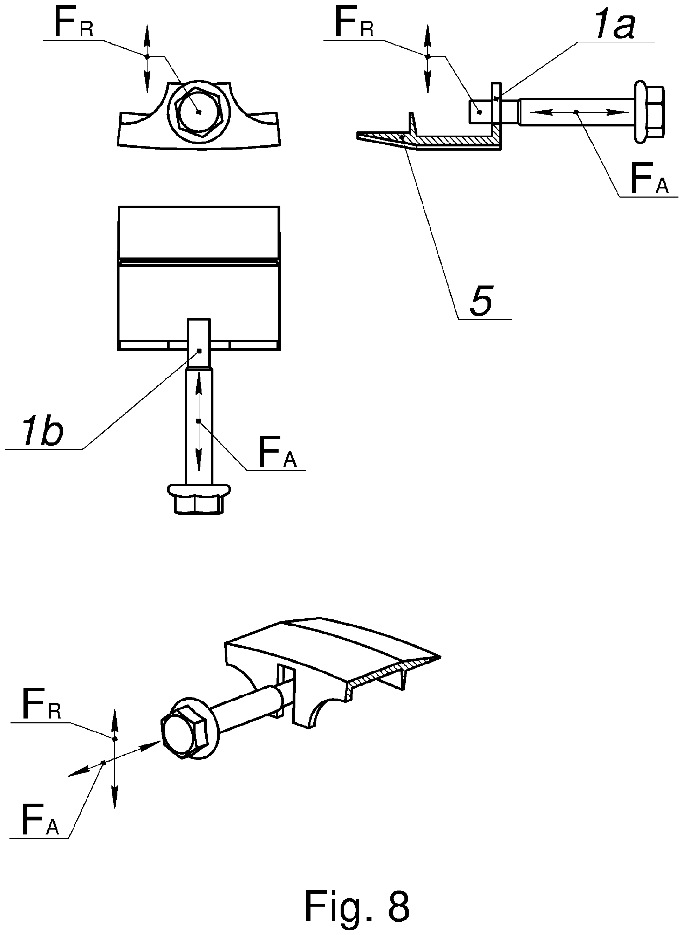

In **Fig.3** kennzeichnet die Bezugszahl 11 ein Außerring, die 12 einen Radstern, die 14 den Innerring der Felge. Die Felge ist dreiteilig ausgeführt und wird mittels Schraubenverbindung fest miteinander verbunden. Die Schraubenverbindung besteht aus Mutter 13 und Schraube 15, die gleichzeitig die Funktion des Übertragungselementes der radseitigen Einrichtung hat. Die Übertragungselemente der radseitigen Einrichtung (1b) besitzen ein freies Restgewinde und greifen damit in die Kontaktstellen der Übertragungselemente der maschinenseitigen Einrichtung (1a) ein, wie es in **Fig.5** und **Fig.8** gezeigt wird. So erfolgt der Transport der mechanischen Leistung von der elektrischen Maschine (3) zum Rad (2).

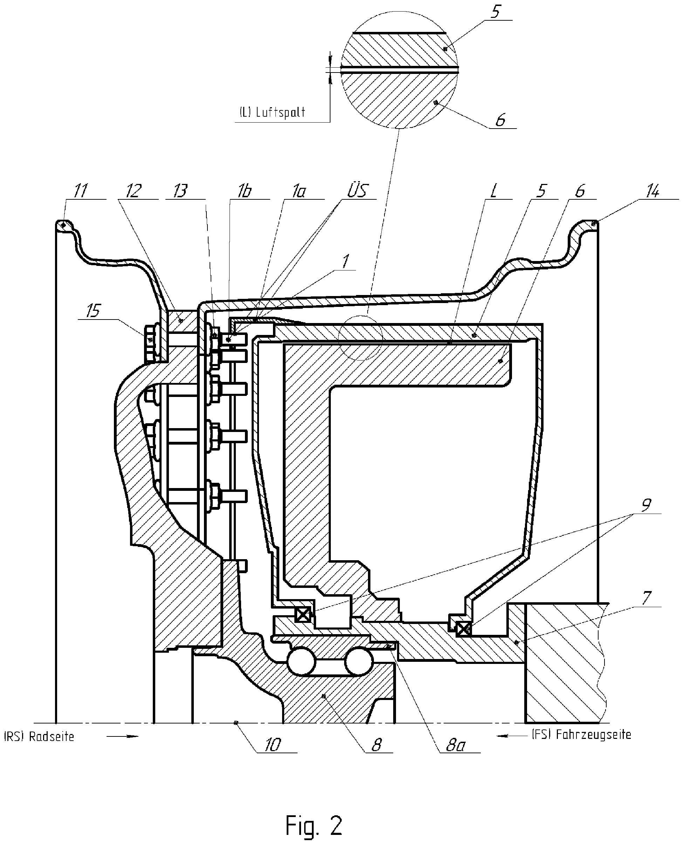

**Fig. 2** ist eine detaillierte Längsschnittdarstellung entlang der Raddrehsachse (10) einer in einem Rad (2) eingebauten elektrischen Maschine (3) (z.B. Radnabenmotor) mit einem erfindungsgemäßen Übertragungselement der maschinenseitigen Einrichtung (1a) der Übertragungsstruktur. Das Übertragungselement der maschinenseitigen Einrichtung (1a) ist mit dem Rotor (5) fest verbunden. Der Rotor (5) wird drehbar auf der Hauptlagerung (8) gelagert. Die Hauptlagerung (8) wird an dem Radstern (12) befestigt. Die Hauptlagerung (8) besteht aus dem nichtdrehenden Flansch (8a), der auf einem zweireihigen Schrägkugellager gelagert wird. Weiterhin wird die Hauptlagerung (8) in eine Welle (7) eingeführt, welche eine Anbindung zum Fahrzeug (4) hat. Die Welle (7) wird mittels Schraubverbindung mit dem Fahrzeug (4) verbunden. Der Stator (6) wird kraftschlüssig mit der Welle (7) verbunden. Auf dem Stator (6) ist eine Luftspaltwicklung angeordnet. Die elektrische Maschine (3) ist ein außenlaufender Radnabenmotor mit dem Luftspalt (L). Einer der wichtigsten Parameter der elektrischen Maschine (3) ist der Luftspalt (L), der sich zwischen den Teilen des Stators (6) und des Rotors (5) befindet. Die Größe des Luftspaltes (L) beeinflusst stark die magnetische Flussdichte im Luftspalt (L), was in einer direkten Verbindung mit der Leistungswandlung und dem Wirkungsgrad der elektrischen Maschine (3) steht. Daher wird bestrebt die Größe des Luftspaltes (L) möglichst gering auszuführen. Jedoch darf der Luftspalt (L) den minimalen Wert unter allen Fahrsituationen und Belastungen nicht unterschreiten, da sonst die Gefahr der Kollision zwischen den Teilen des Stators (6) und des Rotors (5) besteht, was zum Defekt der elektrischen Maschine (3) führen würde. Um den Einfluss der äußeren Lasten auf den Luftspalt (L) zu minimieren, erfolgt die Kopplung der Antriebseite der elektrischen Maschine mit dem Rad (2) über eine Übertragungsstruktur bestehend aus Übertragungselementen der radseitigen und Übertragungselementen der maschinenseitigen Einrichtung. Über diese Übertragungsstruktur wird die elektrische Maschine (3) von den Belastungen auf das Rad (2) entkoppelt.

Während der Fahrt erfährt das Rad (2) und Fahrzeug (4) verschiedene Belastungen. Von dem Rad (2) werden die Belastungen auf die Hauptlagerung (8) übertragen, wo diese vom zweireihigen Schrägkugellager aufgenommen und weiter an das Fahrzeug (4) geleitet wird.

Die elektrische Maschine (3) ist so konstruiert, dass die statischen Belastungen nicht über die Teile der elektrischen Maschine (3) weitergeleitet werden. Sondern werden vom Rad (2) über den Außenring (11) und Innenring (14) an den Radstern (12) weitergeleitet. Das Prinzip ist durch die Anwendung der kinematischen Anordnung der Hauptlagerung (8) und Nebenlagerung (9) gegeben. Hier werden die Lasten an die Hauptlagerung (8) weitergeleitet. Die Hauptlagerung sitzt in der Welle (7) und leitet die Belastungen anschließend an das Fahrzeug (4) weiter. In Folge der Belastung ist nur eine geringe Verbiegung der Welle (7) zugelassen. Da der Stator (6) fest mit der Welle (7) verbunden ist, bewirkt eine Verbiegung der Welle (7) eine Schiefstellung des Stators (6). Dadurch können sich unerwünschte Verkleinerungen im Luftspalt (L) einstellen.

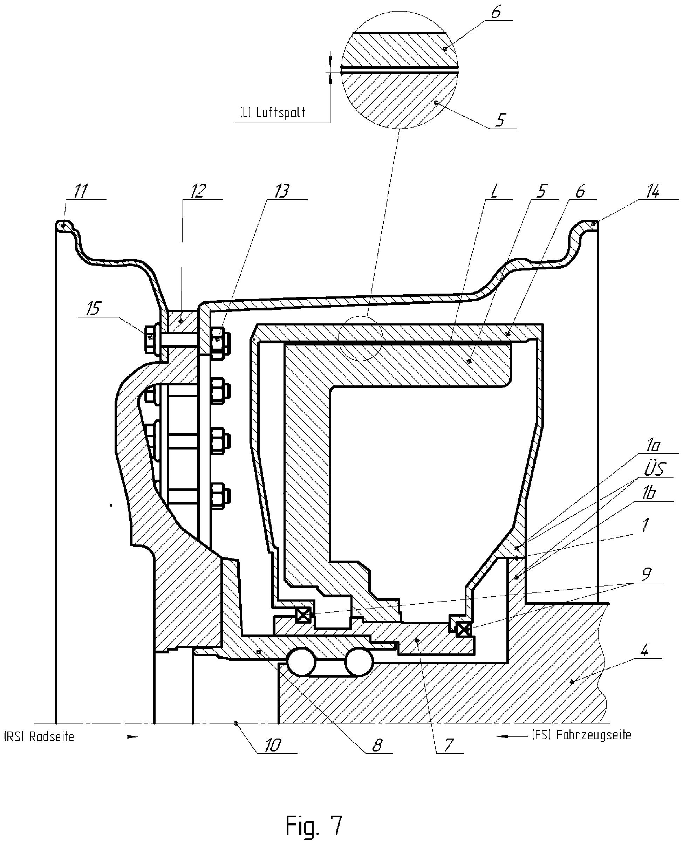

Der Rotor (5) der elektrischen Maschine (3) ist drehbar auf der Welle (7) durch die Nebenlagerung (9) gelagert und leitet das Antriebsdrehmoment über die Übertragungsstruktur in das Rad (2) ein. Die Aufgabe der Nebenlagerung (9) der elektrischen Maschine (3) ist die Lagerung und Stabilität des Rotors (5). Das Übertragungselement der maschinenseitigen Einrichtung (1a) stellt an sich einen Ring mit Aussparrungen dar, weiterhin Kontaktstellen genannt, wie in die **Fig.5** gezeigt wird. In diese Kontaktstellen greifen die freien, gewindelosen Übertragungselemente der radseitigen Einrichtung (1b) ein, die gleichzeitig die Schrauben (15) sind, mit denen der Außenring (11) mit dem Innenring (14) und Radstern (12) fest verschraubt sind. Die Übertragungselemente der maschinenseitigen Einrichtung (1a) können sich in den Kontaktstellen der Übertragungselemente der radseitigen Einrichtung (1b) in radiale und axiale Richtung frei bewegen, somit werden keine Deformationen des Rades (2) auf die Antriebseite der elektrischen Maschine (3) übertragen, wie in **Fig.8** gezeigt wird. In tangentialer Richtung stützen sich die Übertragungselemente der maschinenseitigen Einrichtung (1a) an der Seitenfläche der Kontaktstellen ab und können somit das Drehmoment auf das Rad (2) weiterleiten. Zudem zeigt **Fig.7** schematisch ein Ausführungsbeispiel der Vorrichtung (1) für ein im Rad (2) eingebauter Radnabenmotor mit einem erfindungsgemäßen Übertragungselement der maschinenseitigen Einrichtung (1a) und der fahrzeugseitigen Einrichtung (1b) der Übertragungsstruktur (ÜS) im Längsschnitt entlang der Raddrehsachse (10) für die Ausführung 1.

### AUSFÜHRUNG 2

Bei der vorangehend ausgeführten Ausführung 1 sind das Rad (2) und die elektrische Maschine (3) mittels Übertragungsstruktur bestehend aus Übertragungselemente der radseitigen und maschinenseitigen Einrichtung verbunden. Wie in **Fig.1****,** **Fig.2****,** **Fig.3****,** **Fig.6****,** **Fig.7** und **Fig.9** gezeigt wird, kann die ausgeführte Übertragungsstruktur aus Übertragungselemente der radseitigen Einrichtung (1b) und maschinenseitigen Einrichtung (1a) bestehen, die das Übertragungsprinzip realisieren.

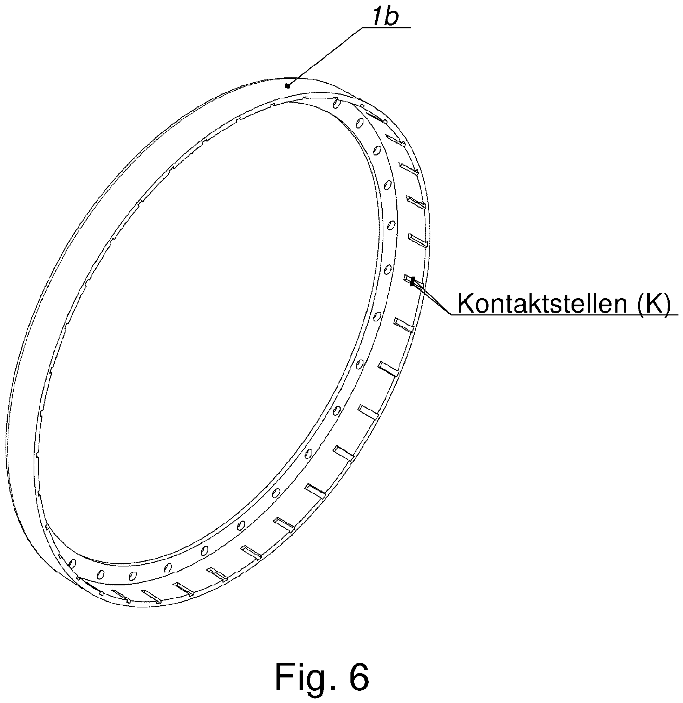

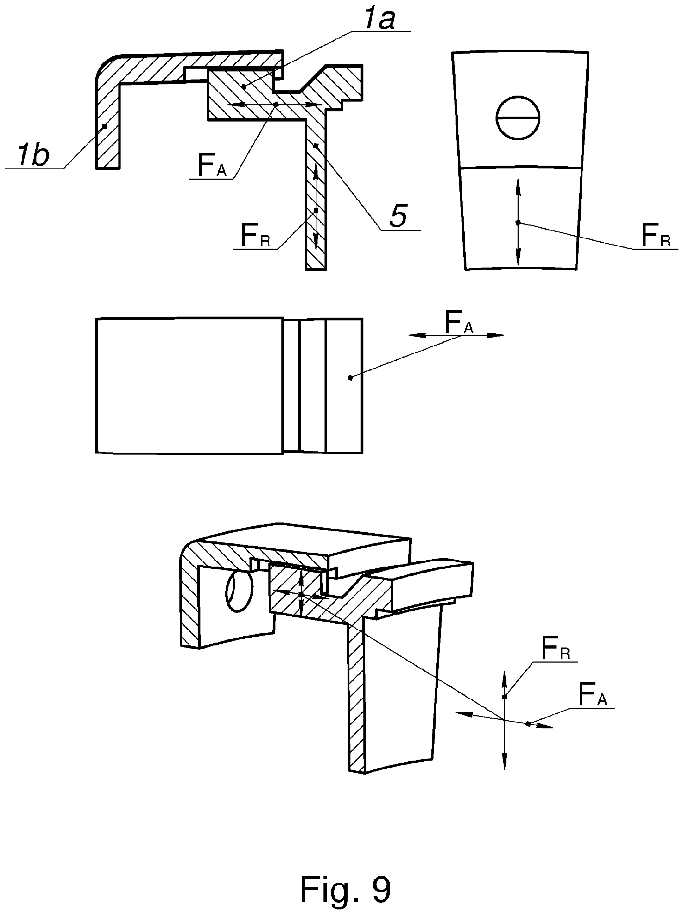

Das Übertragungselement der radseitigen Einrichtung (1b) stellt an sich einen Ring mit Nuten dar, weiterhin Kontaktstellen genannt, wie in die **Fig.6** gezeigt wird. Das Übertragungselement der radseitigen Einrichtung (1b) ist durch die Schrauben (15) und Muttern (13) mit dem Außenring (11), dem Radstern (12) und dem Innenring (14) fest verschraubt. In die Kontaktstellen greifen die Übertragungselemente der maschinenseitigen Einrichtung (1a) ein. Die Übertragungselemente der maschinenseitigen Einrichtung (1a) können sich in den Kontaktstellen der Übertragungselemente der radseitigen Einrichtung (1b) in radiale und axiale Richtung frei bewegen, somit werden keine Deformationen des Rades (2) auf die Antriebseite der elektrischen Maschine (3) übertragen, wie in **Fig.9** gezeigt wird. In die tangentiale Richtung stützen sich die Übertragungselemente der maschinenseitigen Einrichtung (1a) an der Seitenfläche der Kontaktstellen ab und können somit das Drehmoment auf das Rad (2) weiterleiten.

Zudem zeigt **Fig.7** schematisch ein Ausführungsbeispiel der Vorrichtung (1) für ein im Rad (2) eingebauter Radnabenmotor mit einem erfindungsgemäßen Übertragungselement der maschinenseitigen Einrichtung (1a) und der fahrzeugseitigen Einrichtung (1b) der Übertragungsstruktur (ÜS) im Längsschnitt entlang der Raddrehsachse (10) für die Ausführung 2.

### Bezugszeichenliste:

- 1: Vorrichtung
- 1a: Übertragungselement der fahrzeugseitigen/radseitigen Einrichtung
- 1b: Übertragungselement der maschinenseitigen Einrichtung
- 2: Rad
- 3: elektrische Maschine
- 4: Fahrzeug
- 5: Rotor
- 6: Stator
- 7: Welle
- 8: Hauptlagerung
- 8a: nichtdrehender Flansch
- 9: Nebenlagerung
- 10: Raddrehachse
- 11: Außerring
- 12: Radstern
- 13: Mutter
- 14: Innerring
- 15: Schraube
- RS: Radseite
- FS: Fahrzeugseite
- F: Kraft, eingeleitet durch Fahrmanöver
- F_{A}: Kraft in axialer Richtung
- F_{R}: Kraft in radialer Richtung
- L: Luftspalt
- K: Kontaktstelle
- KF: Kraftfluss der Kraft F von dem Rad 2 auf das Fahrzeug 4
- ÜS: Übertragungsstruktur

## Patentansprüche

1. Vorrichtung (1) zur Drehmomentübertragung zwischen einem Rad (2) und einer im Rad (2) integrierten elektrischen Maschine (3) umfassend zumindest einen Rotor (5), einen Stator (6), eine Welle (7), eine Hauptlagerung (8) und eine Nebenlagerung (9), **dadurch gekennzeichnet, dass** eine geteilte Übertragungsstruktur (ÜS) vorgesehen ist, welche formschlüssig zueinander angeordnete Übertragungselemente (1a, 1b) umfasst, wobei ein steifer Formschluss eine spielfreie Übertragung eines Antriebsdrehmomentes oder eines Abstützmoments entlang einer Raddrehachse (10) ermöglicht und wobei die Nebenlagerung (9) eine koaxiale Rotation zwischen feststehenden und rotierenden Teilen der Vorrichtung (1) gewährleistet, wobei alle nicht zum Antriebsdrehmoment bzw. Abstützmoment beitragenden Kräfte durch die Übertragungselemente (1a, 1b) mechanisch entkoppelt sind, wobei eine Kraftführung durch eine kinematische Anordnung von Haupt- (8) und Nebenlagerung (9) erfolgt.

2. Vorrichtung (1) nach Anspruch 1, wobei die geteilte Übertragungsstruktur (ÜS) ein maschinenseitiges (1a) und ein radseitiges Übertragungselement (1b) umfasst.

3. Vorrichtung (1) nach Anspruch 1, wobei die geteilte Übertragungsstruktur (ÜS) ein maschinenseitiges (1a) und ein fahrzeugseitiges Übertragungselement (1b) umfasst.

4. Vorrichtung (1) nach Anspruch 1 oder 2, wobei die maschinenseitigen Übertragungselemente (1a) der Übertragungsstruktur (ÜS) vom Rotor (5), der Welle (7) oder einer an diesen Teilen (5, 7) befestigten Tragstruktur gebildet werden.

5. Vorrichtung (1) nach Anspruch 1 oder 3, wobei die maschinenseitigen Übertragungselemente (1a) der Übertragungsstruktur (ÜS) vom Stator (6), der Welle (7) oder einer an diesen Teilen befestigten Tragstruktur gebildet werden.

6. Vorrichtung (1) nach Anspruch 1 oder 2, wobei die radseitigen Übertragungselemente (1b) der Übertragungsstruktur (ÜS) von einer Felge, einer Nabe, einer Bremseinrichtung, der Welle (7) des Rades (2) oder einer an diesen Teilen befestigten Tragstruktur gebildet werden.

7. Vorrichtung (1) nach Anspruch 1 oder 3, wobei die maschinenseitigen Übertragungselemente (1a) der Übertragungsstruktur (ÜS) vom Fahrzeug (4), einem nichtdrehenden Flansch (8a) der Hauptlagerung (8) oder einer an diesen Teilen befestigten Tragstruktur gebildet werden.

8. Vorrichtung (1) nach Anspruch 1, **dadurch gekennzeichnet, dass** durch die geteilte Übertragungsstruktur (ÜS) die radseitigen Übertragungselemente (1b) in maschinenseitige Übertragungselemente (1a) axial einschiebbar sind.

9. Vorrichtung (1) nach Anspruch 1, **dadurch gekennzeichnet, dass** die Übertragungsstruktur (ÜS) so ausgebildet ist, dass mehrere konvexe in radialer Richtung weisende radseitige oder fahrzeugseitige Übertragungselemente (1b), in zugehörige konkave Übertragungselemente der zweiten Anordnung (1a) so eingreifen, dass jeweils ein Formschluss zwischen den radseitigen oder fahrzeugseitigen Übertragungselementen (1b) und dem maschinenseitigen Übertragungselement (1a) auftritt und insgesamt eine bewegliche lösbare Verbindung gebildet wird.

10. Vorrichtung (1) nach Anspruch 1, **dadurch gekennzeichnet, dass** die Übertragungsstruktur (ÜS) so ausgebildet ist, dass mehrere konvexe in axialer Richtung weisende fahrzeugseitige Übertragungselemente (1b), in zugehörige konkave Übertragungselemente der zweiten Anordnung (1a) so eingreifen, dass jeweils ein Formschluss zwischen den radseitigen oder den fahrzeugseitigen Übertragungselementen (1b) und dem maschinenseitigen Übertragungselement (1a) auftritt und insgesamt eine bewegliche lösbare Verbindung gebildet wird.

11. Vorrichtung (1) nach Anspruch 1, **dadurch gekennzeichnet, dass** die Übertragungselemente bei ihrer Verbindung eine Spielpassung haben.

12. Vorrichtung (1) nach Anspruch 1, **dadurch gekennzeichnet, dass** die Teile der Übertragungsstruktur seitens des Rades als Verbindungselemente für eine mehrteilige, vorzugsweise eine dreiteilige Felge dienen.

13. Vorrichtung (1) nach einem der vorhergehenden Ansprüche, **dadurch gekennzeichnet, dass** die elektrische Maschine (3) als ein Außenläufer ausgebildet ist.

14. Vorrichtung (1) nach einem der vorhergehenden Ansprüche, **dadurch gekennzeichnet, dass** die elektrische Maschine (3) als ein Innenläufer ausgebildet ist.

## Claims

1. A device (1) for the transfer of torque between a wheel (2) and an electrical machine (3) integrated in the wheel (2) comprising at least one rotor (5), a stator (6), a shaft (7), a main bearing (8) and an auxiliary bearing (9), **characterised in that** there is provided a divided transmission structure (US), which comprises transmission elements (1a,1b) arranged in positive engagement with each other,
**wherein** a rigid positive engagement allows a play-free transmission of a drive torque or of a supporting moment along a wheel axis (10) and
**wherein** the auxiliary bearing (9) ensures a coaxial rotation between fixed and rotating parts of the device (1),
**wherein** all forces not contributing to the drive torque or supporting moment are mechanically decoupled by the transmission elements (1a, 1b),
**wherein** there results a guidance of force through a kinematic arrangement of main-(8) and auxiliary-bearing (9).

2. A device (1) according to Claim 1,
**wherein** the divided transmission structure (US) comprises a machine-side (1a) and a wheel-side transmission element (1b).

3. A device (1) according to Claim 1,
**wherein** the divided transmission structure (US) comprises a machine-side (1a) and a vehicle-side transmission element (1b).

4. A device (1) according to Claim 1 or 2,
**wherein** the machine-side transmission elements (1a) of the transmission structure (US) are formed of the rotor (5), the shaft (7) or a support structure attached to these parts (5,7).

5. A device (1) according to Claim 1 or 3,
**wherein** the machine-side transmission elements (1a) of the transmission structure (US) are formed of the stator (6), the shaft (7) or a support structure attached to these parts.

6. A device (1) according to Claim 1 or 2,
**wherein** the wheel-side transmission elements (1b) of the transmission structure (US) are formed of a rim, a hub, a brake device, the shaft (7) of the wheel (2) or a support structure attached to these parts.

7. A device (1) according to Claim 1 or 3,
**wherein** the machine-side transmission elements (1a) of the transmission structure (US) are formed of the vehicle (4), a non-rotating flange (8a) of the main bearing (8) or a support structure attached to these parts.

8. A device (1) according to Claim 1,
**characterised in that,** by means of the divided transmission structure (US), the wheel-side transmission elements (1b) are axially insertable in machine-side transmission elements (1a).

9. A device (1) according to Claim 1,
**characterised in that** the transmission structure (US) is so constructed that a plurality of convex wheel-side or vehicle-side transmission elements (1b) facing in radial direction engage in associated concave transmission elements of the second arrangement (1a) so that in each case there arises a positive engagement between the wheel-side or vehicle-side transmission elements (1b) and the machine-side transmission element (1a) and overall there is formed a moveable releasable connection.

10. A device (1) according to Claim 1,
**characterised in that** the transmission structure (US) is so constructed that a plurality of convex wheel-side transmission elements (1b) facing in axial direction engage in associated concave transmission elements of the second arrangement (1a) so that in each case there arises a positive engagement between the wheel-side or the vehicle-side transmission elements (1b) and the machine-side transmission element (1a) and overall there is formed a moveable releasable connection.

11. A device (1) according to Claim 1,
**characterised in that** the transmission elements are connected with a clearance fit.

12. A device (1) according to Claim 1,
**characterised in that** the parts of the transmission structure on the side of the wheel serve as connector elements for a multiple-part, preferably a threepart rim.

13. A device (1) according to any one of the preceding claims,
**characterised in that** the electrical machine (3) is constructed as an outer rotor.

14. A device (1) according to any one of the preceding claims,
**characterised in that** the electrical machine (3) is constructed as an inner rotor.

## Revendications

1. Dispositif (1) pour la transmission de couple de rotation entre une roue (2) et une machine électrique (3) intégrée dans la roue (2) comprenant au moins un rotor (5), un stator (6), un arbre (7), un support principal (8) et un support secondaire (9), **caractérisé en ce qu'**une structure de transmission (ÜS) divisée est prévue, laquelle comprend des éléments de transmission (1a, 1b) disposés les uns par rapport aux autres par complémentarité de forme, dans lequel une complémentarité de forme rigide permet une transmission sans jeu d'un couple de rotation d'entraînement ou d'un couple de soutien le long d'un axe de rotation de roue (10) et dans lequel le support secondaire (9) assure une rotation coaxiale entre des parties immobiles et rotatives du dispositif (1), dans lequel toutes les forces ne contribuant pas au couple de rotation d'entraînement ou au couple de soutien sont découplées mécaniquement par les éléments de transmission (1a, 1b), dans lequel un acheminement de force est effectué par un agencement cinématique du palier principal (8) et du palier secondaire (9).

2. Dispositif (1) selon la revendication 1, dans lequel la structure de transmission (ÜS) divisée comprend un élément de transmission côté machine (1a) et un élément de transmission côté roue (1b).

3. Dispositif (1) selon la revendication 1, dans lequel la structure de transmission (ÜS) divisée comprend un élément de transmission côté machine (1a) et un élément de transmission côté véhicule (1b).

4. Dispositif (1) selon la revendication 1 ou 2, dans lequel les éléments de transmission côté machine (1a) de la structure de transmission (ÜS) sont formés par le rotor (5), l'arbre (7) ou une structure porteuse fixée sur lesdites parties (5, 7).

5. Dispositif (1) selon la revendication 1 ou 3, dans lequel les éléments de transmission côté machine (1a) de la structure de transmission (ÜS) sont formés par le stator (6), l'arbre (7) ou une structure porteuse fixée sur lesdites parties.

6. Dispositif (1) selon la revendication 1 ou 2, dans lequel les éléments de transmission côté roue (1b) de la structure de transmission (ÜS) sont formés par une jante, un moyeu, un dispositif de freinage, l'arbre (7) de la roue (2) ou une structure porteuse fixée sur lesdites parties.

7. Dispositif (1) selon la revendication 1 ou 3, dans lequel les éléments de transmission côté machine (1a) de la structure de transmission (ÜS) sont formés par le véhicule (4), un flasque (8a) non rotatif du palier principal (8) et une structure porteuse fixée sur lesdites parties.

8. Dispositif (1) selon la revendication 1, **caractérisé en ce que** les éléments de transmission côté roue (1b) peuvent être enfilés axialement dans des éléments de transmission côté machine (1a) par la structure de transmission (ÜS) divisée.

9. Dispositif (1) selon la revendication 1, **caractérisé en ce que** la structure de transmission (ÜS) est réalisée de telle sorte que plusieurs éléments de transmission (1b) côté roue ou côté véhicule convexes pointant dans la direction radiale viennent en prise avec des éléments de transmission concaves associés du deuxième agencement (1a) de telle sorte que respectivement une complémentarité de forme se produit entre les éléments de transmission (1b) côté roue ou côté véhicule et l'élément de transmission côté machine (1a) et globalement une liaison amovible mobile est formée.

10. Dispositif (1) selon la revendication 1, **caractérisé en ce que** la structure de transmission (ÜS) est réalisée de telle sorte que plusieurs éléments de transmission côté véhicule (1b) convexes pointant dans la direction axiale viennent en prise avec des éléments de transmission concaves associés du deuxième agencement (1a) de telle sorte que respectivement une complémentarité de forme se produit entre les éléments de transmission côté roue ou côté véhicule (1b) et l'élément de transmission côté machine (1a) et globalement une liaison amovible mobile est formée.

11. Dispositif (1) selon la revendication 1, **caractérisé en ce que** les éléments de transmission ont un jeu lors de leur liaison.

12. Dispositif (1) selon la revendication 1, **caractérisé en ce que** les parties de la structure de transmission font office du côté de la roue d'éléments de liaison pour une jante en plusieurs parties, de préférence une jante en trois parties.

13. Dispositif (1) selon l'une quelconque des revendications précédentes, **caractérisé en ce que** la machine électrique (3) est réalisée en tant qu'un induit extérieur.

14. Dispositif (1) selon l'une quelconque des revendications précédentes, **caractérisé en ce que** la machine électrique (3) est réalisée en tant qu'un induit intérieur.
